(19) Europäisches Patentamt / European Patent Office / Office européen des brevets

(11) **EP 3 534 325 B1**

(12) **EUROPEAN PATENT SPECIFICATION**

(45) Date of publication and mention
of the grant of the patent:
**06.04.2022   Bulletin 2022/14**

(21) Application number: **16919835.5**

(22) Date of filing: **27.10.2016**

(51) International Patent Classification (IPC):
*G06T 5/00* (2006.01)     *G06T 5/40* (2006.01)
*G06T 5/50* (2006.01)     *H04N 5/355* (2011.01)
*H04N 5/335* (2011.01)

(52) Cooperative Patent Classification (CPC):
**G06T 5/007; G06T 5/40; G06T 5/50; H04N 5/335; H04N 5/355**

(86) International application number:
**PCT/KR2016/012159**

(87) International publication number:
**WO 2018/079877 (03.05.2018 Gazette 2018/18)**

(54) **IMAGE PROCESSING DEVICE AND METHOD FOR COMPRESSING DYNAMIC RANGE OF WIDE-RANGE IMAGE**

BILDVERARBEITUNGSVORRICHTUNG UND VERFAHREN ZUR KOMPRIMIERUNG DES DYNAMISCHEN BEREICHS EINES BILDES MIT GROSSEM BEREICH

DISPOSITIF DE TRAITEMENT D'IMAGES ET PROCÉDÉ DE COMPRESSION DE PLAGE DYNAMIQUE POUR DES IMAGES À LARGE PLAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.10.2016   KR 20160139160**

(43) Date of publication of application:
**04.09.2019   Bulletin 2019/36**

(73) Proprietor: **Hanwha Techwin Co., Ltd.
Seongnam-si, Gyeonggi-do 13488 (KR)**

(72) Inventor: **LEE, Chang Min
Changwon-si
Gyeongsangnam-do 51542 (KR)**

(74) Representative: **Gulde & Partner
Patent- und Rechtsanwaltskanzlei mbB
Wallstraße 58/59
10179 Berlin (DE)**

(56) References cited:
| | |
|---|---|
| JP-A- 2007 310 887 | JP-A- 2009 296 178 |
| KR-A- 20130 034 186 | US-A1- 2009 161 953 |
| US-A1- 2014 341 468 | |

• CVETKOVIC S ET AL: "Tone-mapping functions and multiple-exposure techniques for high dynamic-range images", IEEE TRANSACTIONS ON CONSUMER ELECTRONICS, IEEE SERVICE CENTER, NEW YORK, NY, US, vol. 54, no. 2, 1 May 2008 (2008-05-01), pages 904-911, XP011229982, ISSN: 0098-3063, DOI: 10.1109/TCE.2008.4560177

• RONAN BOITARD ET AL: "Temporal Coherency in Video Tone Mapping, A Survey", BESSA M. AND MANTIUK R, 1 January 2013 (2013-01-01), XP055469400,

**Description**

**TECHNICAL FIELD**

The present invention relates to an image processing apparatus, and more particularly, to an apparatus and a method for generating an image having a wide dynamic range (WDR) from a WDR image sensor.

**BACKGROUND ART**

A solid-state image pickup device such as a CCD image sensor or a CMOS image sensor used in a video camera, a digital camera, or the like performs photoelectric conversion of accumulating charges corresponding to the amount of incident light and outputting an electric signal corresponding to the accumulated charges. However, there is an upper limit in a charge accumulation amount of a photoelectric conversion device and when a light amount of a predetermined level or more is received, the accumulated charge amount reaches a saturation level, and so-called white noise occurs in which a subject area with a predetermined brightness level is set to a saturated luminance level.

In order to prevent such a phenomenon, an exposure time is shortened by dividing a shutter at a high speed for a bright subject to shorten a charge accumulation period of the photoelectric conversion device, and an electric signal is output before the accumulated charge amount reaches the saturation level. By this processing, it is possible to output an image in which a gradation corresponding to a subject is accurately reproduced. However, in the case of photographing a subject with a mixture of light and dark areas, if the shutter is divided at the high speed, a sufficient exposure time cannot be obtained in a dark part, and a signal-to-noise ratio (SNR) and an image quality deteriorate.

In order to accurately reproduce a luminance level of the bright portion and the dark portion in the photographed image of a subject in which both the light part and the dark part are mixed, separate processing is required, which realizes a high SNR with a long exposure time in a pixel with small incident light on an image sensor and avoids saturation in a pixel with large incident light.

As a technique for implementing such processing, there is a known technique of photographing and synthesizing a plurality of images successively having different exposure times. That is, a technique of generating one image by synthesis processing using a short-time exposure image in a bright image area which becomes white in a long-time exposure image by using a long-time exposure image with respect to a dark image area by consecutively individually the long-time exposure image and the short-time exposure image, that is, a wide dynamic range (WDR) technology is developed.

When the WDR technology is used as described above, a wide image of a dynamic range may be acquired by synthesizing a plurality of different exposure images. For example, when photographing at a place where a backlight such as a window in a room is present, when photographing at a time when a list and a dark place are mixed such as a night view, or when photographing by a sunny list such as a sporting event and a dark place by a shade, in various photographing environments, a more natural image may be acquired by applying the WDR technology.

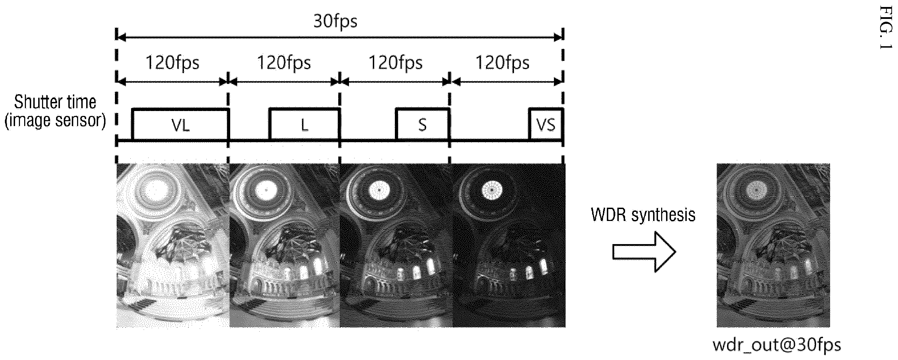

FIG. 1 illustrates an example of a general WDR frame generation technology. Here, a case in which one WDR frame is synthesized by synthesizing four subchannels in an image sensor supporting 120 frames per second (fps) is illustrated. Even though an original subchannel supports 120 fps, since four subchannels are synchronized into one WDR frame, only up to 30 fps are actually allowed. In this case, four subchannels are photographed at different shutter times (exposure times), respectively and may have shutter times of very long (VL), long (L), short (S), and very short (VS), respectively. As described above, four subchannels have different luminances due to the different shutter times.

However, since such a WDR frame has a wider dynamic range than each subchannel, it is necessary to reduce (compress) the dynamic range for output from a display device (e.g., a display device, an image display terminal, etc.) having a limited dynamic range.

For example, assuming that each subchannel is 12 bits and a dynamic range displayable in the display device is also 12 bits, the dynamic range of the WDR frame acquired by synthesizing four subchannels significantly increases to 23 to 24 bits according to a gain and an overlap range of each subchannel. Thus, it is necessary to compress the increased dynamic range back to 12 bits.

In the related art, however, inherent characteristics of each subchannel may not be sufficiently reflected in the dynamic range compression and a fixed knee curve is mainly just used, and thus the WDR frame does not match the inherent characteristics of the subchannel. On the contrary, even though the knee curve is generated based on scene analysis, when compression transformation is performed excessively sensitively according to a change of a scene, image artifacts arise.

Therefore, in a multi-channel-based WDR frame technology, it is necessary to create a dynamic range compression scheme that may compress the dynamic range on the basis of the scene but sufficiently reflect characteristics of each subchannel.

CVETKOVIC S ET AL: "Tone-mapping functions and multiple-exposure techniques for high dynamic-range images", IEEE TRANSACTIONS ON CONSUMER ELECTRONICS, IEEE SERVICE CENTER, NEW YORK, NY, US, vol. 54, no. 2, 1 May 2008 (2008-05-01), pages 904-911, XP011229982, ISSN: 0098-3063, DOI: 10.1109/TCE.2008.4560177 and Ronan Boitard ET AL: "Temporal Coherency in Video Tone Mapping, A Survey", Bessa M. and Mantiuk R, 1 January 2013 (2013-01-01), XP055469400, are relevant prior art.

## DISCLOSURE

### TECHNICAL PROBLEM

The present invention has been made to solve the above-mentioned problems occurring in the related art and an object to be achieved by the present invention is to provide an apparatus and a method for image processing, which can sufficiently reflect characteristics of respective subchannels in dynamic range compression of a multi-channel based WDR frame.

Another object to be achieved by the present invention is to provide an apparatus and a method for image processing, which comprehensively consider a distribution of a designated area and a saturated area of each subchannel in the dynamic range compression of the multi-channel based WDR frame.

However, technical objects of the present disclosure are not restricted to the technical object mentioned as above. Unmentioned technical objects will be apparently appreciated by those skilled in the art by referencing the following description.

### TECHNICAL SOLUTION

In order to accomplish the above objects, according to an aspect of the present invention, an image processing apparatus as defined in claim 1.

In order to accomplish the above objects, according to another aspect of the present invention, a wide image processing method as defined in claim 10.

Further embodiments of the present invention are defined in the dependent claims.

### ADVANTAGEOUS EFFECTS

In an apparatus and a method for dynamic range compression according to the present invention, a dynamic range of a WDR frame can be compressed adaptively according to an environment in which an image is photographed to reduce deterioration of an image quality.

Further, in compression of the dynamic range of the WDR frame, since an image characteristic of each of subchannels for synthesizing the WDR frame is comprehensively reflected, a WDR frame can be provided, which is visually very natural to a user.

### DESCRIPTION OF DRAWINGS

FIG. 1 illustrates an example of a general WDR frame generation technology.
FIG. 2 is a block diagram illustrating an image processing apparatus according to an embodiment of the present invention.
FIG. 3 is a block diagram more specifically illustrating a configuration of a memory access unit.
FIG. 4 is a block diagram illustrating a detailed configuration of a wide image generating unit of FIG. 2.
FIG. 5 is a block diagram illustrating a subchannel synthesis process performed by a wide image synthesis unit of FIG. 2.
FIG. 6 is a block diagram illustrating a detailed configuration of a knee curve generating unit of FIG. 2.
FIG. 7 is a diagram illustrating an example of a plurality of WDR units and a plurality of subchannels which belongs thereto according to a flow of time.
FIG. 8 is a diagram illustrating a specific method of dividing and counting each subchannel into a designated area and a saturated area.
FIG. 9 is a diagram illustrating an example of setting an extraction area by referring to four consecutive frames with respect to subchannels having the same shutter speed.
FIG. 10 is a diagram illustrating a concept of an extraction area obtained in a total of 16 subchannels.
FIG. 11 is a diagram illustrating an example of an integral histogram.
FIG. 12 is a diagram illustrating a weight corresponding to each interval of the integral histogram.

FIG. 13 is a flowchart specifically showing an operation in a maximum level sensing unit of FIG. 6.

FIG. 14 is a diagram illustrating a knee curve function according to an embodiment of the present invention.

FIG. 15 is a flowchart for describing an image processing method according to an embodiment of the present invention.

## DETAILED DESCRIPTION FOR CARRYING OUT INVENTION

Embodiments will be described in detail in order to allow those skilled in the art to practice the present invention. It should be appreciated that various embodiments of the present invention are different, but are not necessarily exclusive. For example, specific shapes, configurations, and characteristics described in an embodiment of the present invention may be implemented in another embodiment without departing from the scope of the present invention. In addition, it should be understood that positions and arrangements of individual components in each disclosed embodiment may be changed without departing from the scope of the present invention. Therefore, the detailed description provided below should not be construed as being restrictive. In addition, the scope of the present invention is defined only by the accompanying claims and their equivalents if appropriate. Like reference numerals refer to like elements throughout the specification.

Hereinafter, embodiments of the present invention will be described in detail with reference to the accompanying drawings.

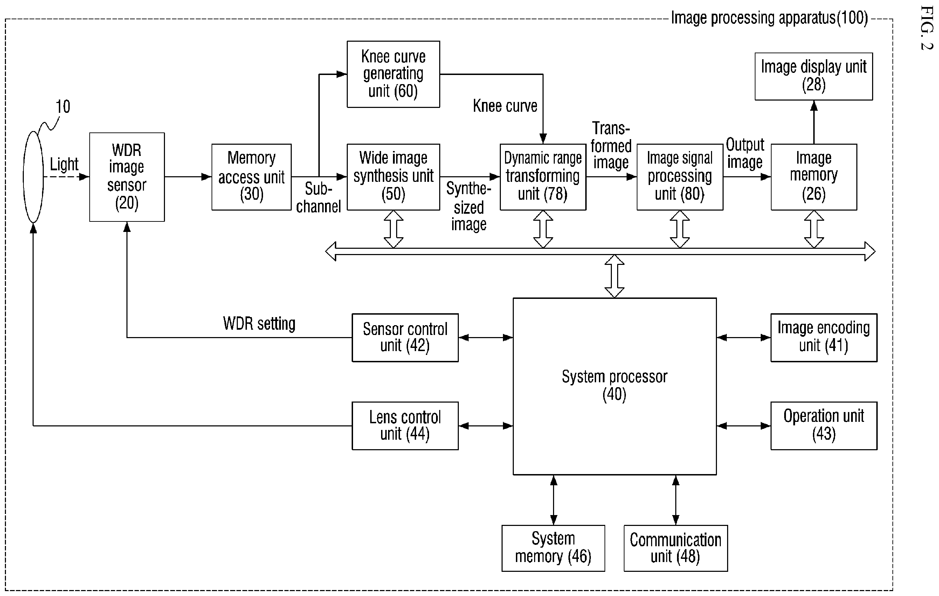

FIG. 2 is a block diagram illustrating an image processing apparatus 100 according to an embodiment of the present invention.

Reflected light emitted from a subject is guided to a WDR image sensor 20 through a photographing lens 10 and converted into image data (electrical signal) in the WDR image sensor 20. The WDR image sensor 20 may be implemented as a solid-state image sensor such as a charge coupled device (CCD) or a complementary metal-oxide semiconductor (CMOS). The WDR image sensor 20 may be a color compliant sensor in which three color filters of red (R), green (G), and blue (B) are bayer-arrayed. In an embodiment, in pixel data, a pixel string output in the order of R, G, R, and G and a pixel string output in the order of B, G, B, and G and a pixel string output in the order of B, G, B, and G are alternately and repeatedly output. However, an output order is an example and the order of colors to be output may be changed according to an array of the color filters of the WDR image sensor 120.

In addition, the WDR image sensor 20 supports a WDR function and provides respective corresponding subchannels (e.g., there are four subchannels in FIG. 1) through a plurality of image channels (image output channels). The subchannels are basic images used for synthesizing one WDR frame as image data photographed under different photographing conditions.

The number of subchannels for synthesizing one WDR frame, that is, a WDR mode may be changed by a WDR mode setting unit (not illustrated). For example, when a current mode is a 4 WDR mode in which four subchannels are synthesized, if the amount of light entering a photographing lens 10 is insufficient and the luminance is lower than a first reference value, the 4 WDR mode may be changed to a 2 WDR mode. Of course, when the luminance is sufficient, the 2 WDR mode may be changed to the 4 WDR mode again.

A memory access unit 30 sequentially accumulates a bayer pixel string provided from the WDR image sensor 20 to constitute subchannels, for example, four subchannels such as very long (VL), long (L), short (S), and very short (VS) and provides the constituted subchannels to a wide image synthesis unit 50 and the knee curve generating unit 60.

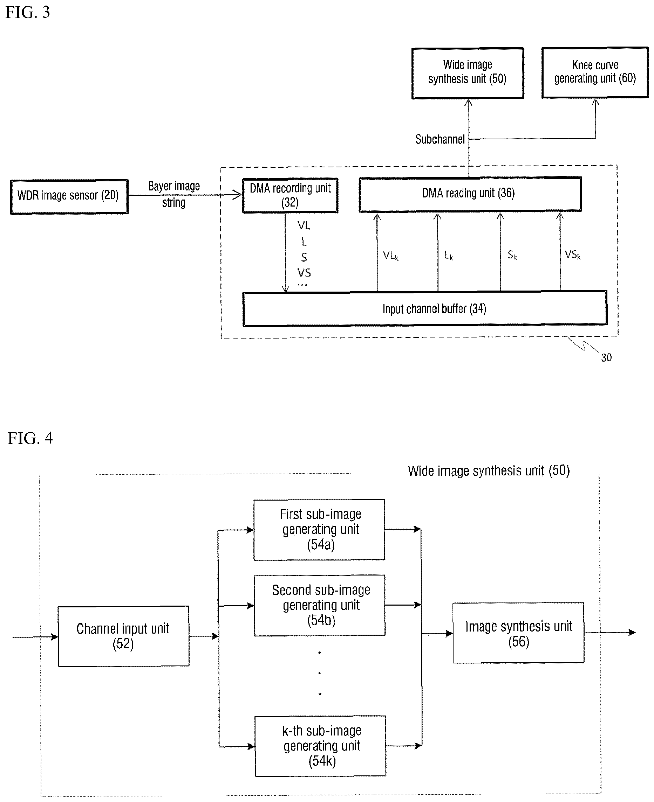

FIG. 3 is a block diagram more specifically illustrating a configuration of a memory access unit 30.

First, the bayer pixel string output from the WDR image sensor 20 is accumulated in a direct memory access (DMA) recording unit 32 of the memory access unit 30 in sequence. The accumulated pixels are constituted by respective subchannels and stored in an input channel buffer 34. The input channel buffer 34 outputs subchannels $VL_k$, $L_k$, $S_k$, and $VS_k$ having different shutter times belonging to a k-th frame to the DMA reading unit 36 according to the WDR mode, that is, the number n of subchannels. The DMA reading unit 36 provides the subchannels in response to a request from the wide image synthesis unit 50 or the knee curve generating unit 60.

Referring back to FIG. 2, the wide image synthesis unit 50 synthesizes n subchannels included in an image frame output from the WDR image sensor 20 to synthesize wide image frames. The n is preferably a power of 2 as a natural number. A specific operation performed by the wide image synthesis unit 50 will be described below with reference to FIG. 4.

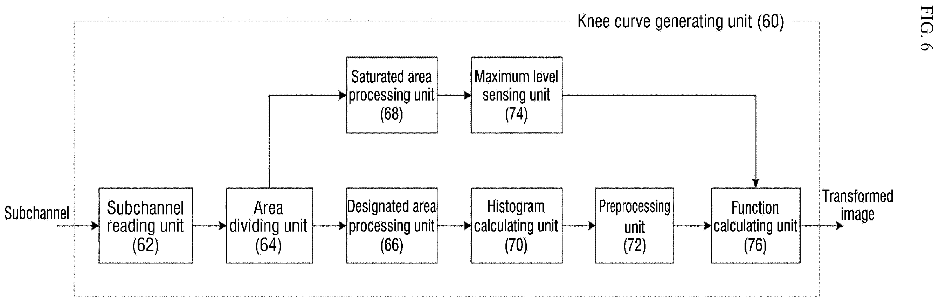

Further, the knee curve generating unit 60 calculates an integral histogram from luminance levels of a total of m x n subchannels included in m image frames among the image frames and generates a knee curve from the integral histogram. The m is preferably equal to n as the natural number, but is not particularly limited thereto. The specific operation performed by the knee curve generating unit 60 will be described below with reference to FIG. 6.

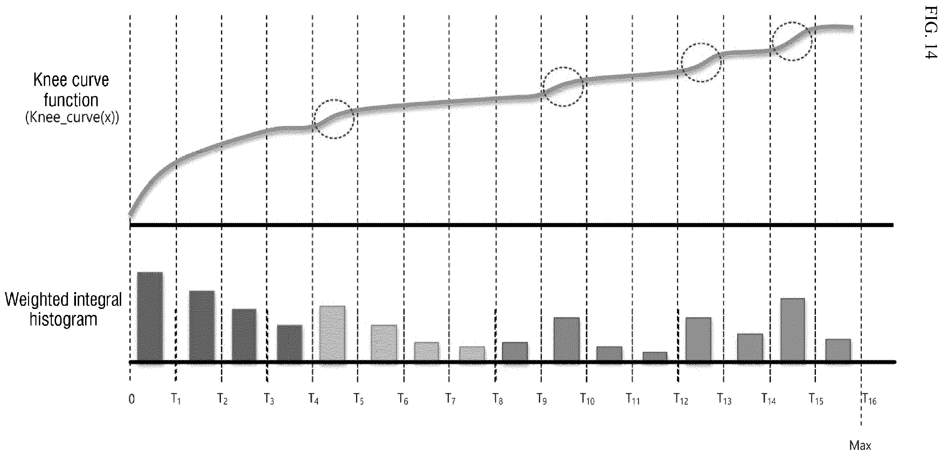

A dynamic range transforming unit 78 reduces (compresses) a dynamic range of the synthesized wide image by using the generated knee curve to generate a transformed image. For example, the dynamic range transforming unit 78 may compress the dynamic range by using the knee curve illustrated in FIG. 14. Among them, a horizontal axis represents a dynamic range transformation-prior luminance value (input luminance level) and a vertical axis represents a dynamic range transformation-post luminance value (output luminance level). A wide dynamic range of the WDR frame is reduced to a dynamic range degree of the subchannel through a process of transforming the input luminance level into the output luminance level.

An image signal processing unit 80 postprocesses the transformed image provided by the dynamic range transforming unit 78. Such a postprocess may include processes including adjustment of a white balance, gamma processing, gain adjustment, and the like. An image encoding unit 41 reads the WDR frame stored in an image memory 26 and performs an image encoding process of the WDR frame and stores processed data in the image memory 26 again.

The WDR frame (still image or moving picture) output from the image signal processing unit 80 is stored in the image memory 26. An image display unit 28 is constituted by a liquid crystal display (LCD), an organic light-emitting diode (OLED), a cathode ray tube (CRT), and the like and displays the WDR frame recorded in the image memory 26 on a screen. Further, the image display unit 28 may be turned on/off according to an instruction from an operation unit 43.

The image encoding unit 41 reads the WDR frame stored in the image memory 26, performs the image encoding process of the WDR frame and stores the processed data in the image memory 26 again.

The operation unit 43 as a means for inputting various operation instructions of a system processor 40 may be configured by a single combination or a plurality of combinations such as a switch or a dial, a touch panel, pointing by sight detection, a voice recognition device, or the like. A user may set various functions including power on/off, WDR mode on/off, zoom in/out, on/off of the image display unit, and the like through the operation unit 43.

A sensor control unit 42 controls a mechanical or electronic shutter provided in the WD image sensor 20. Further, the sensor control unit 42 may also control a flash dimming function by interlocking with a flash (not illustrated). Further, a lens control unit 44 may control a focus or a zoom magnification of the photographing lens 10. In addition, the sensor control unit 42 may set the WDR mode according to the control of the system processor 40. The WDR mode represents the number of subchannels used for synthesizing one WDR image and is generally set to the power of 2 such as 2 or 4.

The system processor 40 is a controller that controls the entirety of an image processing apparatus 100. A program executed by the system processor 40 is recorded and sequentially read and executed. Further, an area storing system information or an area storing user setting information is provided in the system memory 46 to read or restore various information or settings during later activation. The system memory 46 may be implemented as a random access memory (RAM), a flash memory, a solid state disk (SSD), or the like.

In addition, a communication unit 48 has a communication function such as USB, IEEE1394, LAN, etc. and may receive a control signal from the image processing apparatus 100 and another apparatus or transmit the generated WDR frame to the another apparatus.

FIG. 4 is a block diagram illustrating a detailed configuration of a wide image synthesis unit 50. The wide image generating unit 50 may be configured to include a channel input unit 52, subchannel generating units 54a, 54b, and 54k, and an image synthesis unit 56.

The channel input unit 52 sequentially receives an input of n subchannels from the memory access unit 30. The subchannel generating units 54a, 54b, and 54k generate a plurality of sub-images from the respective subchannels sequentially input into the channel input unit 52. The image synthesis unit 56 synthesizes pixels of the plurality of generated sub-images to generate a wide image. Here, the pixel may have an RGB data format, a YUV data format, or a YCbCr data format, but is not limited thereto.

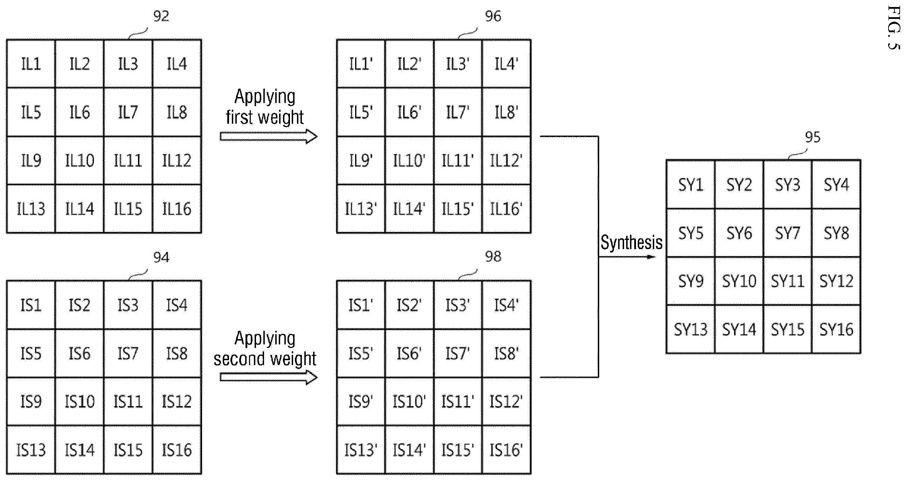

FIG. 5 is a block diagram illustrating a subchannel synthesis process performed by a wide image synthesis unit 50 of FIG. 2. A first subchannel generating unit 54a generates a first sub-image 92 photographed with a relatively long shutter time and a second subchannel generating unit 54b generates a second sub-image 92 photographed with a relatively short shutter time.

The image synthesis unit 56 obtains a first weighted sub-image 96 by applying a first weight to the first sub-image 92 and obtains a second weighted sub-image 98 by applying a second weight to the second sub-image 94 and thereafter, adds pixels at corresponding locations in the weighted sub-images 96 and 98 to generate one WDR frame 95. In this case, the sum of the first weight and the second weight may be 1. The weights may be assigned to each sub-image, but may be assigned for each area (or block) within the sub-image. In FIG. 5, it is exemplified that two sub-image are synthesized, but the same is applied even when four or different numbers of sub-images are synthesized.

FIG. 6 is a block diagram illustrating a detailed configuration of a knee curve generating unit 60. The knee curve generating unit 60 calculates the integral histogram from the luminance levels of a total of m x n subchannels included in m image frames among the image frames and generates the knee curve from the integral histogram. The m and n may be the natural numbers and in particular, may be the power of 2. Further, the m and n are preferably the same value. In the following description, it will be described that m and n are assumed to be equally 4 as an example.

In FIG. 6, the knee curve generating unit 60 may be configured to include a subchannel reading unit 62, an area dividing unit 64, a designated area processing unit 66, a saturated area processing unit 68, a histogram calculating unit 70, a preprocessing unit 72, a maximum level sensing unit 74, and a function calculating unit 76.

First, the subchannel reading unit 62 reads the subchannels provided from the memory access unit 30 for each subchannel.

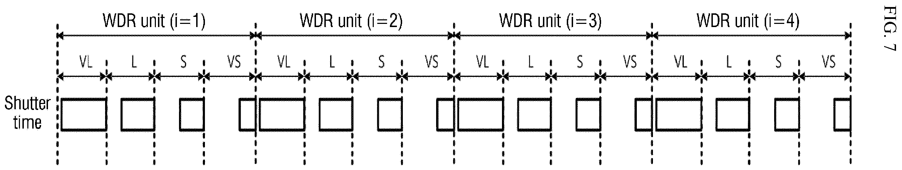

The area dividing unit 64 divides the designated area and the saturated area for each of a total of 4 x 4, that is, 16 subchannels. Referring to FIG. 7, one WDR unit includes subchannels VL, L, S, and VS having four different shutter times. One WDR unit is a basic unit for generating one WDR frame. The WDR unit (i = 1 to 4) is consecutively generated at a predetermined time interval depending on a frame rate. As described above, when one frame (or WDR unit) has four subchannels, a total of 16 subchannels may be used as basic information for the dynamic range transformation of the present invention with reference to four frames.

A designated area processing unit 66 sets extraction areas having a lower threshold value and an upper threshold value based on the luminance level of the designated area and counts the number of pixels included in the extraction area. In this case, the designated area processing unit 66 may set the extraction areas not to overlap with each other among subchannels having the same shutter time among $4 \times 4$ subchannels. Here, the extraction areas set not to overlap with each other belong to 4 different consecutive WDR frames, respectively.

Meanwhile, the saturated area processing unit 68 counts the number of pixels included in the divided saturated area.

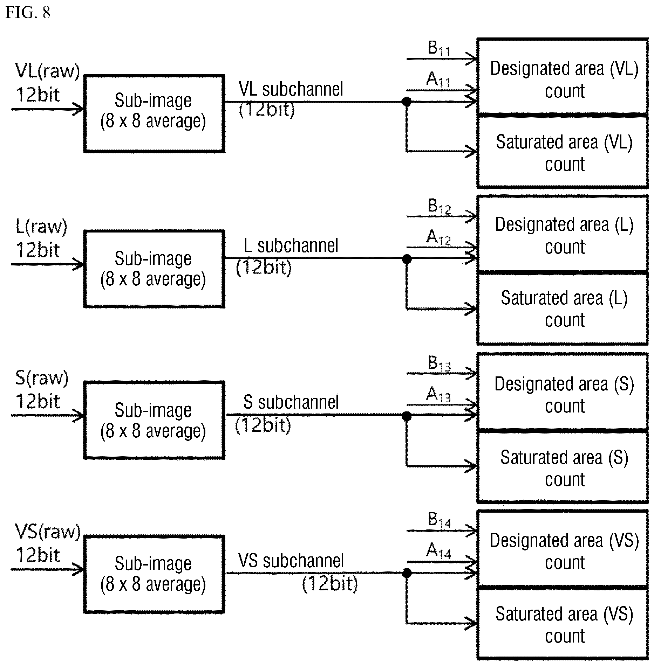

FIG. 8 is a diagram illustrating a specific method of dividing and counting each subchannel into a designated area and a saturated area. Here, the designated area and the saturated area of four subchannels are divided for one WDR frame (i = 1). First, each sub-image may be directly input into the subchannel, but a process of obtaining an average of blocks having a size of 8x8 blocks and downsampling the obtained average to one sample may be additionally performed in order to reduce the amount of computation in a subsequent process. The designated area and the saturated area are determined with respect to each of four subchannels obtained through the downsampling process. Here, the saturated area as an area of a pixel having a luminance of a predetermined level or more means an area where luminance saturation which is difficult to visually distinguish occurs and the designated area means an area excluding an image saturated area.

The designated area processing unit 66 sets a lower threshold value A and an upper threshold value B with respect to the designated area to count the number of pixels included in a luminance area therebetween, that is, the extraction area.

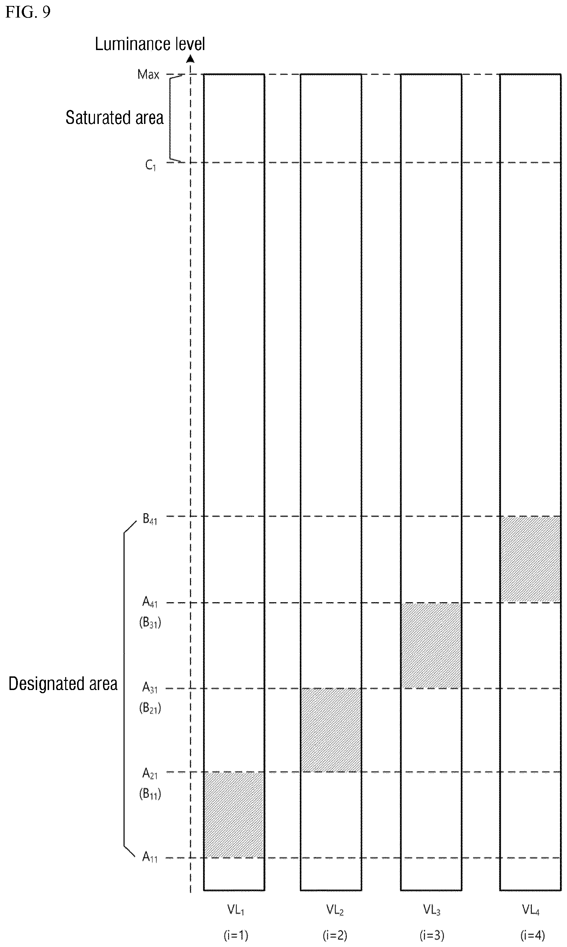

In this case, all of the extraction areas are not extracted from one subchannel in a specific frame (i = 1 in FIG. 9), but preferably distributed and extracted from a plurality of frames. Such a scheme is to prevent the knee curve for dynamic area compression from being too rapidly changed and prevent a wholly large distortion from occurring even though some subchannels in which unpredictable noise is generated are present. Further, setting multiple threshold values from one subchannel in a specific frame increases a load on the system, which may burden smooth processing of real-time WDR images.

In addition, how many frames to specifically consider for n subchannels is an element to be considered. The present invention proposes that the number of subchannels preferably matches the number of frames to be considered by considering both a calculation amount of the dynamic range compression and a quality of image transformation. Such a point may also be verified through an actual simulation via various images.

FIG. 9 is a diagram illustrating an example of setting an extraction area by referring to four consecutive frames (I = 1 to 4) with respect to subchannels (e.g., VL) having the same shutter speed. In this case, the extraction areas on the respective subchannels preferably set the lower threshold value A and the upper threshold value B so as not to overlap with each other. In this case, an upper threshold value (e.g., B11) of a temporally previous subchannel matches an upper threshold value (e.g., A21) of a subsequent subchannel. Of course, the extraction areas may be set to slightly overlap with each other. In this case, the number of overlapped areas may be counted in both extraction areas.

Here, an area larger than a reference value C1 corresponds to an area which is difficult to visually distinguish and visually saturated. However, since four subchannels VL1 to VL4 are all present in the saturated area, the saturated area processing unit 68 may count all of four saturated areas, but may just count only a saturated area in a first subchannel VL1.

Four extraction areas may be obtained with respect to one subchannel VL as described above and similarly, since four extraction areas may be obtained even for each of other subchannels L, S, and VS, the number of extraction areas will be consequently 16 in total. In this case, similarly, the ranges of the extraction areas obtained in one subchannel are also preferably prevented from overlapping with the ranges of the extraction areas obtained in another subchannel. For example, VL takes charge of a relatively dark luminance area, VS takes charge of a relatively bright luminance area, and L and S takes charge of the luminance area therebetween.

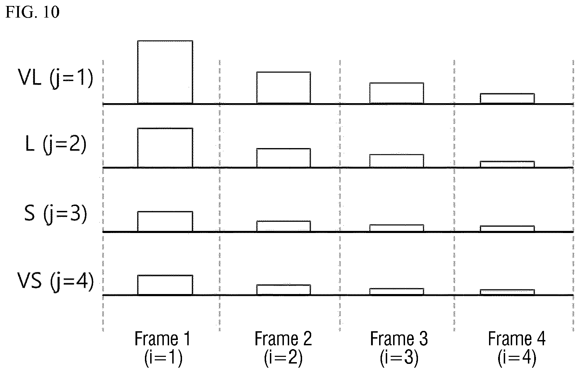

Through the above process, in a case where one frame has four subchannels, when up to four frames are considered, one extraction area is obtained in each of a total of 16 subchannels. Thus, as illustrated in FIG. 10, a total of 16 extraction regions are obtained as basic data for obtaining one knee curve transformation function.

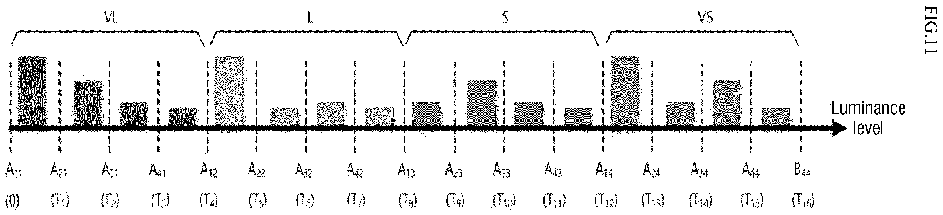

Meanwhile, a histogram calculating unit 70 of FIG. 6 calculates the integral histogram based on the number of pixels, which is counted in the extraction areas. Specifically, as illustrated in FIG. 11, the histogram calculating unit 70 generates and arranges numbers counted in a total of 16 extraction areas obtained in the above process, that is, the unit histograms from a lowest luminance level to a highest luminance level to calculate the integral histogram. Here, VL having a longest shutter time takes charge of a dark part and VS having a shortest shutter time takes charge of a bright part. In FIG. 10, symbols denoted by types such as Amn and Bmn represent lower and upper threshold values of an n-th subchannel in an m-th frame, respectively. When individual threshold values are represented by threshold values in the integral histogram, the threshold values may be represented by 0 to T-16, respectively.

The preprocessing unit 72 normalizes the calculated integral histogram and applies the weight for each interval to the normalized integral histogram. The normalization process may be obtained by calculating the sum of all histograms and dividing each histogram by the sum. Accordingly, a total sum of the histograms to which normalization is applied becomes 1.

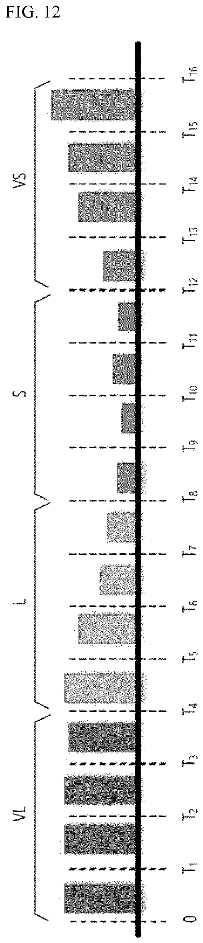

The preprocessing unit 72 applies the weight for each interval to the normalized integral histogram and preferably, the preprocessing unit 72 applies a relatively high weight to an interval having a low luminance level and an interval having a high luminance level, as illustrated in FIG. 12. In FIG. 12, sixteen bar graphs represent magnitudes of the weights for the corresponding histograms, respectively. The reason why a higher weight is applied to the interval having the high or low luminance level than an interval having a medium luminance level is that the dark part and the bright part have inferior visibility in the WDR image, so that a higher bit is allocated to the areas.

The preprocessing unit 72 multiplies the integral histogram by each of the obtained weights for each interval to generate a weighted integral histogram and provide the generated weighted integral histogram to the function calculating unit 76.

Referring back to FIG. 6, the maximum level sensing unit 74 senses a maximum level value based on whether the number of pixels included in the saturated area exceeds a maximum threshold value for each subchannel in an order to a subchannel having the longest shutter time from a subchannel having a shortest shutter time. Such a maximum level value may have a single value for the entire integral histogram.

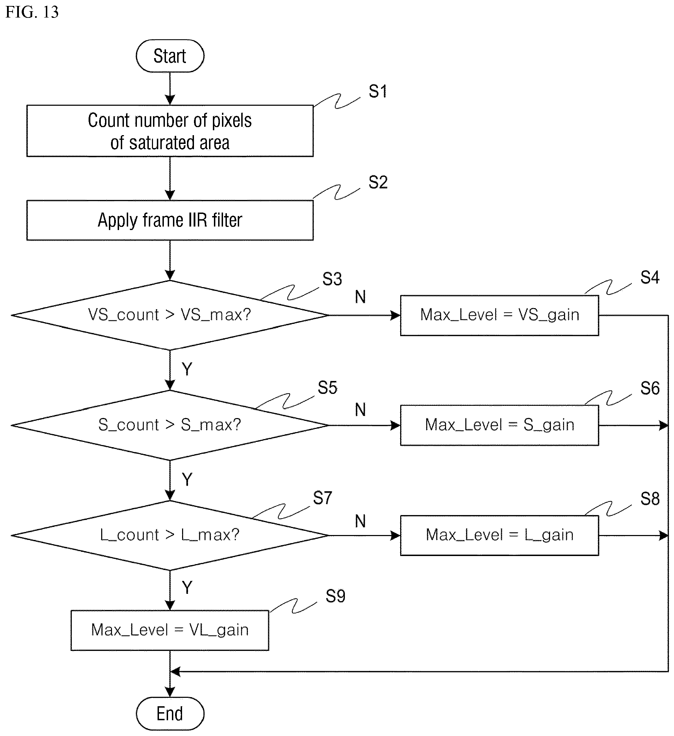

FIG. 13 is a flowchart specifically showing an operation in a maximum level sensing unit 74. First, the saturated area processing unit 68 counts the number of pixels included in the saturated area. The saturated area processing unit 68 may selectively apply an impulse response filter (IIR) filter in addition to the count of the number of pixels (S2).

Then, when a saturated area count VS_count of the very short (VS) subchannel is not larger than a predetermined threshold value VS_max (N in S3), the maximum level sensing unit 74 sets a gain value VS_gain of the VS subchannel to the maximum level value (S4). Otherwise (Y in S3), the process proceed to S5.

In S5, when a saturated area count S_count of the short (S) subchannel is not larger than a predetermined threshold value S_max (N in S5), the maximum level sensing unit 74 sets a gain value S_gain of the S subchannel to the maximum level value (S6). Otherwise (Y in S5), the process proceed to S7.

In S7, when a saturated area count L_count of the long (L) subchannel is not larger than a predetermined threshold value L_max (N in S7), the maximum level sensing unit 74 sets a gain value L_gain of the L subchannel to the maximum level value (S8). Otherwise (Y in S7), the maximum level sensing unit 74 sets the gain value VL_gain of the very long (VL) subchannel to the maximum level value (S9).

As described above, when the number of pixels included in the saturated area of a current subchannel does not exceed a maximum threshold value for the current subchannel, the maximum level sensing unit 74 sets a gain value of the current subchannel to the maximum level value. The gain value means a luminance increase value (luminance weight) given to each subchannel when one WDR image is synthesized from a plurality of subchannels.

Referring back to FIG. 6, the function calculating unit 76 calculates a slope for each interval with respect to the intervals of the integral histogram and calculates the knee curve function for the entire luminance level based on the slope for each interval and the sensed maximum level value. The slope for each interval may be determined by using, for example, a gamma curve.

Specifically, when there are a first interval in which the counted number of pixels is small in the integral histogram and a second interval in which the counted number of pixels subsequently adjacent to the first interval is larger than the counted number of pixels in the first interval, the function calculating unit 76 preferably calculates the knee curve function so that the slope in the second interval increases as compared with the first interval.

Equation 1 below shows a specific example of a knee curve function Knee_curve(x) for each specific interval.

[Equation 1]

$$\text{Knee\_curve(x)} \begin{cases} \dfrac{T_1}{M} \times \dfrac{x}{M} \ (\text{for } 0 < x < T_1) \\ \\ a \times \left[\dfrac{x}{M}\right]^{W_{k+1}} - a + 1 \quad (\text{for } T_k < x < T_{k+1}) \end{cases}$$

Here, x represents the input luminance level value, Tk represents threshold values in the integral histogram, and M represents the maximum level value set in the maximum level sensing unit 74. Further, wk + 1 represents a value in a k + 1-th interval in the weighted integral histogram calculated in the preprocessing unit 72.

Meanwhile, in Equation 1, a coefficient a may be expressed as shown in Equation 2 below.

[Equation 2]

$$a = \frac{\left[\frac{T_k}{M}\right]^2 - 1}{\left[\frac{T_k}{M}\right]^{w_{k+1}} - 1}$$

When the knee curve function for each interval is connected to an entire area through such a process, the integrated knee curve function illustrated in FIG. 14 may be obtained. Such an integrated knee curve function has several following characteristics.

First, Knee_curve(x) is continuous at each boundary point. For example, referring to Equation 1, at x = T1, Knee_curve(x) is equal as (T1 / M)2 in both a function of a left interval and a function of a right interval.

Second, Knee_curve (x) has a characteristic that as a value of the weighted integral histogram in the corresponding interval is larger, the slope of the function increases. In Equation 1, it may be known that as wk + 1 is larger, the slope of $\left[\frac{x}{M}\right]^{w_{k+1}}$ increases (see a circular mark portion of FIG. 14).

Third, all input luminance levels x are scaled by the maximum level value M and input in a form of x/m. Therefore, there is an effect that the input luminance level x is scaled by the determined gain value depending on which subchannel gain value the count of the saturated area is determined as in an algorithm of FIG. 13.

The knee curve function may be adaptively calculated according to a characteristic of the image of the subchannel due to three characteristics of the knee curve function described in the present invention. Thus, for the dynamic range compression, if a certain neural curve function is used in first four frames, a different knee curve function will be used adaptively in next four frames.

When the knee curve function is determined as described above, the dynamic range transforming unit 78 of FIG. 2 compresses the dynamic range of the synthesized image provided by the wide image synthesis unit 50 by using the knee curve function. For example, in FIG. 14, a horizontal axis represents the input luminance level x and a vertical axis represents an output luminance level and a bit amount of the vertical axis is smaller than the bit amount of the horizontal axis, the dynamic range is reduced.

Up to now, respective components of FIGS. 2 to 4 and 6 may be implemented as software such as a task, a class, a sub routine, a process, an object, an execution thread, and a program performed in a predetermined area on the memory or hardware such as field programmable gate array (FPGA) or application-specific integrated circuit (ASIC) and further, may be achieved by combining the software and the hardware. The components may be included in a computer readable storage medium and some of the component or 'unit' may be dispersively distributed.

Further, each block may represent a part of a module, a segment, or a code that includes one or more executable instructions for executing a specified logical function(s). In addition, in several alternative execution examples, functions mentioned in blocks may occur out of sequence. For example, two successive illustrated blocks may in fact be performed substantially concurrently and the blocks may be sometimes performed in reverse order according to the corresponding function.

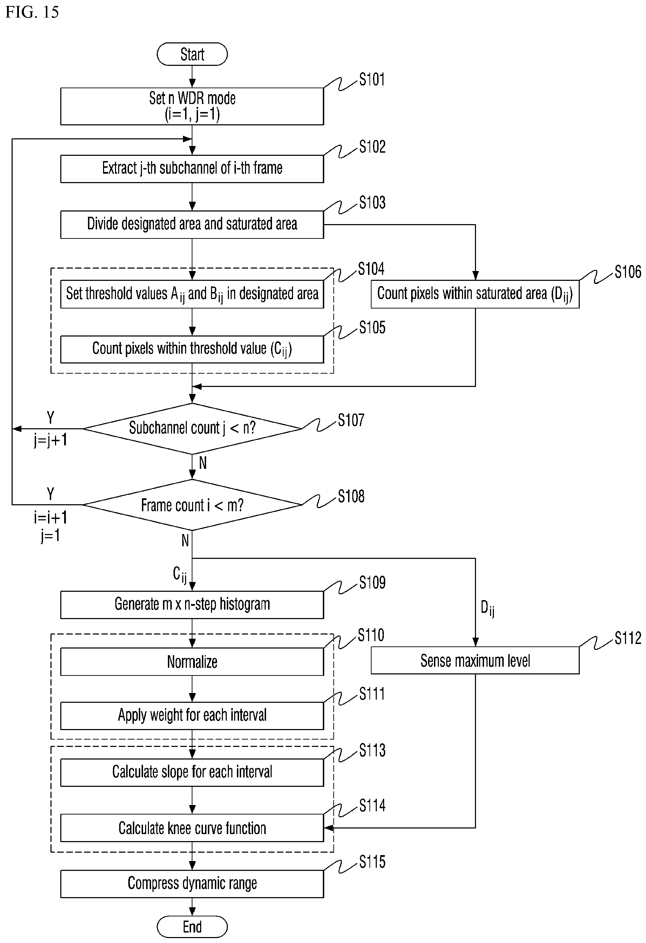

FIG. 15 is a flowchart for describing an image processing method according to an embodiment of the present invention.

First, the sensor control unit 42 sets the WDR image sensor 20 in an n WDR mode for synthesizing the WDR image from n subchannels (S101). Initially, both frame index i and subchannel index j are set to 1.

Subsequently, the subchannel reading unit 62 of the knee curve generating unit 60 reads a j-th subchannel of an i-th frame (S102) and the area dividing unit 64 divides the read subchannel into the designated area and the saturated area (S103).

The designated area processing unit 66 sets lower and upper threshold values Aij and Bij in the divided designated area (S104) and counts the number of pixels, Cij between the two threshold values, that is, in the extraction area (S105). Similarly, the saturated area processing unit 68 counts the number of pixels, Dij in the divided saturation area (S106).

Next, if the subchannel count j is smaller than n (Y in S107), the knee curve generating unit 60 increments j by 1 and proceeds to S102 again. If j and n are equal to each other (N in S107), the knee curve generating unit 60 determines whether the frame count i is smaller than m (S108). In this case, if i is larger than m (Y in S108), i is incremented by 1 and then the process proceeds to S102 again. If i is equal to m (N in S108), since the processing for all of m frames is completed, the process proceeds to S109.

In S109, the histogram calculating unit 70 calculates the integral histogram acquired by summing the total of m x n histograms with reference to the number of pixels, Cij in the extraction region (S109). Thereafter, the preprocessing unit 72 normalizes the integral histogram (S110) and applies a different weight to each interval of the integral histogram to generate the weighted integral histogram (S111).

Meanwhile, the maximum level sensing unit 74 senses the maximum level through the procedure of FIG. 13 with reference to the number of pixels, Dij in the saturation region (S112).

The function calculating unit 76 calculates the slope for each interval of the knee curve function using the weighted integral histogram and the sensed maximum level (S113) and calculates the knee curve function for the entire interval in which the slope for each interval is connected (S114).

Last, the dynamic range transforming unit 78 compresses the dynamic range of the synthesized image provided by the wide image synthesis unit 50 by using the calculated knee curve function.


**Claims**

1.  An image processing apparatus comprising:

    a WDR image sensor (20) configured to output image frames by photographing a subj ect;
    a wide image synthesis unit (50) configured to synthesize a wide image frame by synthesizing a plurality of n subchannels included in each of the image frames;
    a knee curve generating unit (60) configured to generate an integral histogram based on unit histograms of luminance levels calculated for a total of m x n subchannels included in a plurality of m image frames among the image frames and generate a knee curve from the integral histogram; and
    a dynamic range transforming unit (78) configured to reduce a dynamic range of the synthesized wide image by using the generated knee curve,

    wherein the subchannels correspond to images acquired with different exposure times.

2.  The image processing apparatus of claim 1, wherein each of the m and the n is 4 and the n subchannels include very long (VL), long (L), short (S), and very short (VS) channels.

3.  The image processing apparatus of claim 1, wherein the knee curve generating unit (60) includes

    an area dividing unit (64) configured to divide a designated area for each of the m x n subchannels,
    a designated area processing unit (66) configured to set extraction areas having a lower threshold value and an upper threshold value based on the luminance level of the designated area and count the number of pixels included in the extraction area, and
    a histogram calculating unit (70) configured to calculate a unit histogram for each of the m x n subchannels based on the counted number of pixels and combine the calculated unit histograms to generate an integral histogram.

4.  The image processing apparatus of claim 3, wherein the designated area processing unit (66) is configured to set the extraction areas not to overlap with each other among subchannels having the same shutter time among the m x n subchannels, and
    wherein the extraction areas set not to overlap with each other belong to the m different consecutive image frames, respectively.

5.  The image processing apparatus of claim 4, wherein the histogram calculating unit (70) is configured to count the pixels included in the extraction areas set not to overlap with each other and arranges the counted pixels in order of the luminance level to generate an integral histogram having a total of m x n frequency data.

6.  The image processing apparatus of claim 3, wherein the knee curve generating unit (60) further includes a preprocessing unit (72) configured to normalize the generated integral histogram and apply a weight for each interval to the normalized integral histogram.

**7.** The image processing apparatus of claim 6, wherein the preprocessing unit (72) is configured to apply a relatively high weight to an interval having a lowest luminance level and an interval having a highest luminance level in the normalized integral histogram.

**8.** The image processing apparatus of claim 3, wherein the area dividing unit (64) is configured to divid a saturated area for each of the m x n subchannels in addition to the designated area, and
the knee curve generating unit (60) further includes a saturated area processing unit (68) configured to count the number of pixels included in the divided saturated area.

**9.** The image processing apparatus of claim 8, wherein the knee curve generating unit (60) further includes a maximum level sensing unit (74) configured to sense a maximum level value based on whether the number of pixels included in the saturated area exceeds a maximum threshold value for each subchannel in order from a subchannel having a shortest shutter time to a subchannel having a longest shutter time, and
wherein when the number of pixels included in the saturated area of a current subchannel does not exceed a maximum threshold value for the current subchannel, the maximum level sensing unit (74) is configured to sense a gain value of the current subchannel as the maximum level value.

**10.** A computer-implemented wide image processing method comprising:

outputting, by a WDR image sensor (20), image frames by photographing a subj ect;
setting extraction areas having a lower threshold value and an upper threshold value based on a luminance level with respect to each of a total of m x n subchannels included in a plurality of m image frames among the image frames, each having a plurality of n subchannels;
counting the number of pixels included in the extraction area;
calculating a unit histogram for each of the subchannels based on the counted number of pixels;
generating an integral histogram by combining the calculated unit histograms;
generating a knee curve from the generated integral histogram;
synthesizing a wide image frame by synthesizing the n subchannels for each of the image frames; and
reducing a dynamic range of the synthesized wide image by using the generated knee curve,

wherein the subchannels correspond to images acquired with different exposure times.

**11.** The wide image processing method of claim 10, wherein the setting of the extraction areas includes setting the extraction areas not to overlap with each other among subchannels having the same shutter time among the m x n subchannels.

**12.** The wide image processing method of claim 11, wherein the extraction areas set not to overlap with each other belong to the m different consecutive image frames, respectively.

**13.** The wide image processing method of claim 12, wherein the generating of the integral histogram includes counting the pixels included in the extraction areas set not to overlap with each other and arranging the counted pixels in order of the luminance level to generate an integral histogram having a total of m x n frequency data.

**14.** The wide image processing method of claim 10, wherein the generating of the knee curve includes normalizing the generated integral histogram and applying the weight for each interval to the normalized integral histogram.

**15.** The wide image processing method of claim 10, further comprising:
adaptively switching from a WDR mode in which each of the image frames has the n subchannels to another WDR mode in which each of the image frames has subchannels, the number of which is different from the n, using the integral histogram.

**Patentansprüche**

**1.** Bildverarbeitungsvorrichtung, umfassend:

einen WDR-(*wide dynamic* range)-Bildsensor (20), der dazu ausgestaltet ist, Einzelbilder durch Fotografieren eines Subjekts auszugeben;

eine Breitbildsyntheseeinheit (50), die dazu ausgestaltet ist, ein Einzelbreitbild zu synthetisieren durch Synthetisieren einer Mehrzahl von n Subkanälen, die in jedem der Einzelbilder enthalten sind;

eine Knickkurvenerzeugungseinheit (60), die dazu ausgestaltet ist, ein integrales Histogramm auf der Basis von Einheitshistogrammen von Luminanzpegeln, die für eine Gesamtmenge von m x n Subkanälen berechnet wurden, die in einer Mehrzahl von m Einzelbildern aus den Einzelbildern enthalten sind, zu erzeugen und eine Knickkurve von dem integralen Histogramm zu erzeugen; und

eine Dynamikbereichsumwandlungseinheit (78), die dazu ausgestaltet ist, einen Dynamikbereich des synthetisierten Breitbildes zu reduzieren unter Verwendung der erzeugten Knickkurve,

wobei die Subkanäle Bildern, die mit verschiedenen Belichtungszeiten erfasst wurden, entsprechen.

2. Bildverarbeitungsvorrichtung nach Anspruch 1, wobei jedes aus dem m und dem n 4 beträgt und die n Subkanäle sehr lange (VL), lange (L), kurze (S) und sehr kurze (VS) Kanäle umfassen.

3. Bildverarbeitungsvorrichtung nach Anspruch 1, wobei die Knickkurvenerzeugungseinheit (60) Folgendes umfasst:

eine Flächenaufteilungseinheit (64), die dazu ausgestaltet ist, eine bestimmte Fläche für jeden aus den m x n Subkanälen aufzuteilen,

eine Verarbeitungseinheit (66) für die bestimmte Fläche, die dazu ausgestaltet ist, Extraktionsflächen, die einen unteren Schwellenwert und einen oberen Schwellenwert aufweisen, auf der Basis des Luminanzpegels der bestimmten Fläche zu bestimmen und die Anzahl von Pixeln, die in der Extraktionsfläche enthalten sind, zu zählen; und

eine Histogrammberechnungseinheit (70), die dazu ausgestaltet ist, ein Einheitshistogramm für jeden der m $\times$ n Subkanäle auf der Basis der gezählten Anzahl von Pixeln zu berechnen und die berechneten Einheitshistogramme zu kombinieren, um ein integrales Histogramm zu erzeugen.

4. Bildverarbeitungsvorrichtung nach Anspruch 3, wobei die Verarbeitungseinheit (66) für die bestimmte Fläche dazu ausgestaltet ist, die Extraktionsflächen so zu bestimmen, dass sie sich unter Subkanälen mit der gleichen Verschlusszeit unter den m x n Subkanälen nicht miteinander überlappen, und

wobei die Extraktionsflächen, die dazu bestimmt sind, sich nicht miteinander zu überlappen, entsprechend den m verschiedenen aufeinanderfolgenden Einzelbildern angehören.

5. Bildverarbeitungsvorrichtung nach Anspruch 4, wobei die Histogrammberechnungseinheit (70) dazu ausgestaltet ist, die Pixel, die in den Extraktionsflächen, die dazu bestimmt sind, sich nicht miteinander zu überlappen, enthalten sind, zu zählen, und die gezählten Pixel nach Luminanzpegel anordnet, um ein integrales Histogramm mit einer Gesamtmenge von m x n Frequenzdaten zu erzeugen.

6. Bildverarbeitungsvorrichtung nach Anspruch 3, wobei die Knickkurvenerzeugungseinheit (60) ferner eine Vorverarbeitungseinheit (72) umfasst, die dazu ausgestaltet ist, das erzeugte integrale Histogramm zu normalisieren und eine Gewichtung für jedes Intervall auf das normalisierte integrale Histogramm anzuwenden.

7. Bildverarbeitungsvorrichtung nach Anspruch 6, wobei die Vorverarbeitungseinheit (72) dazu ausgestaltet ist, eine relativ hohe Gewichtung auf ein Intervall mit einem niedrigsten Luminanzpegel und ein Intervall mit einem höchsten Luminanzpegel in dem normalisierten integralen Histogramm anzuwenden.

8. Bildverarbeitungsvorrichtung nach Anspruch 3, wobei die Flächenaufteilungseinheit (64) dazu ausgestaltet ist, eine gesättigte Fläche für jeden der m $\times$ n Subkanäle zusätzlich zu der bestimmten Fläche aufzuteilen, und

die Knickkurvenerzeugungseinheit (60) ferner eine Verarbeitungseinheit (68) für die gesättigte Fläche umfasst, die dazu ausgestaltet ist, die Anzahl von Pixeln, die in der aufgeteilten gesättigten Fläche enthalten sind, zu zählen.

9. Bildverarbeitungsvorrichtung nach Anspruch 8, wobei die Knickkurvenerzeugungseinheit (60) ferner eine Höchstpegelerfassungseinheit (74) umfasst, die dazu ausgestaltet ist, einen Höchstpegelwert auf der Basis dessen, ob die Anzahl von Pixeln, die in der gesättigten Fläche enthalten sind, einen Höchstschwellenwert für jeden Subkanal überschreitet in der Reihenfolge von einem Subkanal mit einer kürzesten Verschlusszeit zu einem Subkanal mit einer längsten Verschlusszeit zu erfassen, und

wobei, wenn die Anzahl von Pixeln, die in der gesättigten Fläche eines aktuellen Subkanals enthalten sind, einen Höchstschwellenwert nicht überschreitet, die Höchstpegelerfassungseinheit (74) dazu ausgestaltet ist, einen Verstärkungswert des aktuellen Subkanals als Höchstpegelwert zu bestimmen.

**10.** Computerimplementiertes Breitbildverarbeitungsverfahren, umfassend:

Ausgeben, durch einen WDR-Bildsensor (20), von Einzelbildern durch Fotografieren eines Subjekts;
Bestimmen von Extraktionsflächen mit einem unteren Schwellenwert und einem oberen Schwellenwert auf der Basis eines Luminanzpegels in Bezug auf jeden aus einer Gesamtmenge von m x n Subkanälen, die in einer Mehrzahl von m Einzelbildern aus den Einzelbildern enthalten sind, wobei jedes eine Mehrzahl von n Subkanälen aufweist;
Zählen der Anzahl von Pixeln, die in der Extraktionsfläche enthalten sind;
Berechnen eines Einheitshistogramms für jeden der Subkanäle auf der Basis der gezählten Anzahl von Pixeln;
Erzeugen eines integralen Histogramms durch Kombinieren der berechneten Einheitshistogramme;
Erzeugen einer Knickkurve aus dem erzeugten integralen Histogramm; Synthetisieren eines Einzelbreitbildes durch Synthetisieren der n Subkanäle für jedes der Einzelbilder; und
Reduzieren eines Dynamikbereichs des synthetisierten Breitbildes unter Verwendung der erzeugten Knickkurve,

wobei die Subkanäle Bildern, die mit verschiedenen Belichtungszeiten erfasst wurden, entsprechen.

**11.** Breitbildverarbeitungsverfahren nach Anspruch 10, wobei das Bestimmen der Extraktionsflächen das derartige Bestimmen der Extraktionsflächen umfasst, dass sie sich unter Subkanälen mit der gleichen Verschlusszeit unter den m x n Subkanälen nicht miteinander überlappen.

**12.** Breitbildverarbeitungsverfahren nach Anspruch 11, wobei die Extraktionsflächen, die dazu bestimmt sind, sich nicht miteinander zu überlappen, entsprechend den m verschiedenen aufeinanderfolgenden Einzelbildern angehören.

**13.** Breitbildverarbeitungsverfahren nach Anspruch 12, wobei das Erzeugen des integralen Histogramms das Zählen der Pixel, die in den Extraktionsflächen, die dazu bestimmt sind, sich nicht miteinander zu überlappen, enthalten sind, und das Anordnen der gezählten Pixel nach Luminanzpegel, um ein integrales Histogramm mit einer Gesamtmenge von m x n Frequenzdaten zu erzeugen, umfasst.

**14.** Breitbildverarbeitungsverfahren nach Anspruch 10, wobei das Erzeugen der Knickkurve das Normalisieren des erzeugten integralen Histogramms und das Anwenden einer Gewichtung für jedes Intervall auf das normalisierte integrale Histogramm umfasst.

**15.** Breitbildverarbeitungsverfahren nach Anspruch 10, ferner umfassend:
adaptives Schalten aus einem WDR-Modus, in dem jedes der Einzelbilder die n Subkanäle aufweist, in einen anderen WDR-Modus, in dem jedes der Einzelbilder Subkanäle in einer Anzahl, die sich von dem n unterscheidet, aufweist, unter Verwendung des integralen Histogramms.

**Revendications**

**1.** Dispositif de traitement d'image, comprenant :

un capteur d'image à large plage dynamique, *wide dynamic range* - WDR (20) conçu pour sortir des trames d'image en photographiant un sujet ;
une unité de synthèse de large image (50) conçue pour synthétiser une trame de large image en synthétisant une pluralité de n sous-canaux inclus dans chacune des trames d'image ;
une unité de génération de courbe à point de coude (60) conçue pour générer un histogramme intégral sur la base d'histogrammes unitaires de niveaux de luminance calculés pour un total de m x n sous-canaux inclus dans une pluralité de m trames d'image parmi les trames d'image et générer une courbe à point de coude à partir de l'histogramme intégral ; et
une unité de transformation de plage dynamique (78) conçue pour réduire une plage dynamique de la large image synthétisée en utilisant la courbe à point de coude générée,

dans lequel les sous-canaux correspondent à des images acquises avec différentes durées d'exposition.

**2.** Dispositif de traitement d'image selon la revendication 1, dans lequel chaque m et n est 4 et les n sous-canaux incluent des canaux très longs (VL), longs (L), courts (S) et très courts (VS).

3. Dispositif de traitement d'image selon la revendication 1, dans lequel l'unité de génération de courbe à point de coude (60) inclut

une unité de division de zone (64) conçue pour diviser une zone désignée pour chacun des m x n sous-canaux, une unité de traitement de zone désignée (66) conçue pour régler des zones d'extraction ayant une valeur de seuil inférieure et une valeur de seuil supérieure sur la base du niveau de luminance de la zone désignée et compter le nombre de pixels inclus dans la zone d'extraction, et une unité de calcul d'histogramme (70) conçue pour calculer un histogramme unitaire pour chacun des m x n sous-canaux sur la base du nombre de pixels comptés et combiner les histogrammes unitaires calculés pour générer un histogramme intégral.

4. Dispositif de traitement d'image selon la revendication 3, dans lequel l'unité de traitement de zone désignée (66) est conçue pour régler les zones d'extraction pour qu'elles ne se chevauchent pas les unes avec les autres parmi des sous-canaux ayant la même durée d'obturation parmi les m x n sous-canaux, et dans lequel les zones d'extraction réglées pour qu'elles ne se chevauchent pas les unes avec les autres appartiennent aux m trames d'image consécutives différentes, respectivement.

5. Dispositif de traitement d'image selon la revendication 4, dans lequel l'unité de calcul d'histogramme (70) est conçue pour compter les pixels inclus dans les zones d'extraction réglées pour qu'elles ne se chevauchent pas les unes avec les autres et agence les pixels comptés dans l'ordre du niveau de luminance pour générer un histogramme intégral ayant un total de m x n données de fréquence.

6. Dispositif de traitement d'image selon la revendication 3, dans lequel l'unité de génération de courbe à point de coude (60) inclut en outre une unité de prétraitement (72) conçue pour normaliser l'histogramme intégral généré et appliquer un poids pour chaque intervalle à l'histogramme intégral normalisé.

7. Dispositif de traitement d'image selon la revendication 6, dans lequel l'unité de prétraitement (72) est conçue pour appliquer un poids relativement élevé à un intervalle ayant un niveau de luminance le plus bas et un intervalle ayant un niveau de luminance le plus élevé dans l'histogramme intégral normalisé.

8. Dispositif de traitement d'image selon la revendication 3, dans lequel l'unité de division de zone (64) est conçue pour diviser une zone saturée pour chacun des m x n sous-canaux outre la zone désignée, et l'unité de génération de courbe à point de coude (60) inclut en outre une unité de traitement de zone saturée (68) conçue pour compter le nombre de pixels inclus dans la zone saturée divisée.

9. Dispositif de traitement d'image selon la revendication 8, dans lequel l'unité de génération de courbe à point de coude (60) inclut en outre une unité de détection de niveau maximal (74) conçue pour détecter une valeur de niveau maximal sur la base du fait de savoir si oui ou non le nombre de pixels inclus dans la zone saturée dépasse une valeur de seuil maximale pour chaque sous-canal dans l'ordre d'un sous-canal ayant une durée d'obturation la plus courte vers un sous-canal ayant une durée d'obturation la plus longue, et dans lequel lorsque le nombre de pixels inclus dans la zone saturée d'un sous-canal en cours ne dépasse pas une valeur de seuil maximale pour le sous-canal en cours, l'unité de détection de niveau maximal (74) est conçue pour détecter une valeur de gain du sous-canal en cours comme la valeur de niveau maximal.

10. Procédé de traitement de large image implémenté par un ordinateur, comprenant :

la sortie, par un capteur d'image à large plage dynamique (20), de trames d'image en photographiant un sujet ; le réglage de zones d'extraction ayant une valeur de seuil inférieure et une valeur de seuil supérieure sur la base d'un niveau de luminance par rapport à chacun des sous-canaux parmi un total de m x n sous-canaux inclus dans une pluralité de m trames d'image parmi les trames d'image, chacune ayant une pluralité de n sous-canaux ; le décompte du nombre de pixels inclus dans la zone d'extraction ; le calcul d'un histogramme unitaire pour chacun des sous-canaux sur la base du nombre de pixels comptés ; la génération d'un histogramme intégral en combinant les histogrammes unitaires calculés ; la génération d'une courbe à point de coude à partir de l'histogramme intégral généré ; la synthèse d'une trame de large image en synthétisant les n sous-canaux pour chacune des trames d'image ; et la réduction d'une plage dynamique de la large image synthétisée en utilisant la courbe à point de coude générée, dans lequel les sous-canaux correspondent à des images acquises avec différentes durées d'exposition.

**11.** Procédé de traitement de large image selon la revendication 10, dans lequel le réglage des zones d'extraction inclut le réglage des zones d'extraction pour qu'elles ne se chevauchent pas les unes avec les autres parmi des sous-canaux ayant la même durée d'obturation parmi les m x n sous-canaux.

**12.** Procédé de traitement de large image selon la revendication 11, dans lequel les zones d'extraction réglées pour qu'elles ne se chevauchent pas les unes avec les autres appartiennent aux m trames d'image consécutives différentes, respectivement.

**13.** Procédé de traitement de large image selon la revendication 12, dans lequel la génération de l'histogramme intégral inclut le décompte des pixels inclus dans les zones d'extraction réglées pour qu'elles ne se chevauchent pas les unes avec les autres et l'agencement des pixels comptés dans l'ordre du niveau de luminance pour générer un histogramme intégral ayant un total de m x n données de fréquence.

**14.** Procédé de traitement de large image selon la revendication 10, dans lequel la génération de la courbe à point de coude inclut la normalisation de l'histogramme intégral généré en appliquant le poids pour chaque intervalle à l'histogramme intégral normalisé.

**15.** Procédé de traitement de large image selon la revendication 10, comprenant en outre :
la commutation de manière adaptable d'un mode WDR dans lequel chacune des trames d'image présente les n sous-canaux vers un autre mode WDR dans lequel chacune des trames d'image présente des sous-canaux dont le nombre est différent de n, en utilisant l'histogramme intégral.

FIG. 1

FIG. 2

EP 3 534 325 B1

Image processing apparatus(100)

FIG. 3

Wide image synthesis unit (50)

Knee curve generating unit (60)

Subchannel

WDR image sensor (20) →Bayer image string→ DMA recording unit (32)

DMA reading unit (36)

VL
L
S
VS
...

$VL_k$   $L_k$   $S_k$   $VS_k$

Input channel buffer (34)

30

FIG. 4

Wide image synthesis unit (50)

First sub-image generating unit (54a)

Second sub-image generating unit (54b)

Channel input unit (52)

.
.
.

k-th sub-image generating unit (54k)

Image synthesis unit (56)

FIG. 5

FIG. 6

FIG. 7

FIG. 8

EP 3 534 325 B1

FIG. 9

FIG. 10

FIG.11

FIG. 12

FIG. 13

```
                    ┌─────────┐
                    │  Start  │
                    └────┬────┘
                         │
                         ▼
            ┌──────────────────────────┐        S1
            │   Count number of pixels │
            │      of saturated area   │
            └────────────┬─────────────┘
                         │
                         ▼
            ┌──────────────────────────┐        S2
            │    Apply frame IIR filter │
            └────────────┬─────────────┘
                         │
                         ▼                                          S4
                    ╱─────────╲          S3    N    ┌────────────────────────┐
              ╱──────────────────────╲──────────────▶│  Max_Level = VS_gain  │
              ╲   VS_count > VS_max?  ╱               └────────────────────────┘
                    ╲─────────╱
                         │ Y
                         ▼                                          S6
                    ╱─────────╲          S5    N    ┌────────────────────────┐
              ╱──────────────────────╲──────────────▶│  Max_Level = S_gain   │
              ╲    S_count > S_max?   ╱               └────────────────────────┘
                    ╲─────────╱
                         │ Y
                         ▼                                          S8
                    ╱─────────╲          S7    N    ┌────────────────────────┐
              ╱──────────────────────╲──────────────▶│  Max_Level = L_gain   │
              ╲    L_count > L_max?   ╱               └────────────────────────┘
                    ╲─────────╱
                         │ Y
                         ▼                            S9
            ┌──────────────────────────┐
            │   Max_Level = VL_gain    │
            └────────────┬─────────────┘
                         │
                         ▼
                    ┌─────────┐
                    │   End   │
                    └─────────┘
```

FIG. 14

FIG. 15

```
                        ┌─────────┐
                        │  Start  │
                        └─────────┘
                             │
        ┌────────────────────────────────────────┐        S101
        │         Set n WDR mode                  │╮⌇
        │           (i=1, j=1)                    │
        └────────────────────────────────────────┘
                             │
        ┌────────────────────────────────────────┐        S102
        │     Extract j-th subchannel of i-th frame│╮⌇
        └────────────────────────────────────────┘
                             │
        ┌────────────────────────────────────────┐        S103
        │     Divide designated area and saturated area│╮⌇
        └────────────────────────────────────────┘
                             │                    │
   ┌─ ─ ─ ─ ─ ─ ─ ─ ─ ─ ─ ─ ─ ─ ─ ─ ─ ─ ─ ─ ┐  S104    ┌────────────────────────────────┐   S106
   │ ┌──────────────────────────────────────┐│⌇        │ Count pixels within saturated  │⌇
   │ │ Set threshold values A_ij and B_ij in ││        │      area (D_ij)                │
   │ │        designated area                ││        └────────────────────────────────┘
   │ └──────────────────────────────────────┘│  S105
   │ ┌──────────────────────────────────────┐│⌇
   │ │ Count pixels within threshold value   ││
   │ │           (C_ij)                      ││
   │ └──────────────────────────────────────┘│
   └─ ─ ─ ─ ─ ─ ─ ─ ─ ─ ─ ─ ─ ─ ─ ─ ─ ─ ─ ─ ┘
```

Set n WDR mode (i=1, j=1) — S101

Extract j-th subchannel of i-th frame — S102

Divide designated area and saturated area — S103

Set threshold values $A_{ij}$ and $B_{ij}$ in designated area — S104

Count pixels within threshold value ($C_{ij}$) — S105

Count pixels within saturated area ($D_{ij}$) — S106

Subchannel count j < n? — S107
  Y → j=j+1
  N

Frame count i < m? — S108
  Y → i=i+1, j=1
  N

$C_{ij}$

Generate m x n-step histogram — S109

Normalize — S110

Apply weight for each interval — S111

$D_{ij}$

Sense maximum level — S112

Calculate slope for each interval — S113

Calculate knee curve function — S114

Compress dynamic range — S115

End

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Tone-mapping functions and multiple-exposure techniques for high dynamic-range images. **CVETKOVIC S et al.** IEEE TRANSACTIONS ON CONSUMER ELECTRONICS. IEEE SERVICE CENTER, 01 May 2008, vol. 54, 904-911

- **RONAN BOITARD ; BESSA M. ; MANTIUK R et al.** *Temporal Coherency in Video Tone Mapping, A Survey,* 01 January 2013